Europäisches Patentamt

European Patent Office

Office européen des brevets

(11) Veröffentlichungsnummer: **0 407 645 A1**

# EUROPÄISCHE PATENTANMELDUNG

(21) Anmeldenummer: **89112919.9**

(22) Anmeldetag: **14.07.89**

(51) Int. Cl.5: **B60K 17/346**

(43) Veröffentlichungstag der Anmeldung:
**16.01.91 Patentblatt 91/03**

(84) Benannte Vertragsstaaten:
**DE FR GB IT SE**

(71) Anmelder: **AVTOMOBILNY ZAVOD IMENI LENINSKOGO KOMSOMOLA (PROIZVODSTVENNOE OBIEDINENIE "MOSKVICH"**
**Volgogradsky prospekt, 42**
**Moskau(SU)**

(72) Erfinder: **Novichkov, Andrei Vladimirovich**
**Sharikopodshipnikovskaya ulitsa, 32 kv. 40**
**Moscow(SU)**
Erfinder: **Smorgonsky, Lev Isaakovich**
**Sokolnichesky val, 38 kv. 21**
**Moscow(SU)**
Erfinder: **Dlugokansky, Vladimir Andreevich**
**Zeleny prospekt, 44/5 kv. 81**
**Moscow(SU)**
Erfinder: **Krutashov, Anatoly Vasilievich**
**ulitsa Marshala Golovanova, 11 kv. 533**
**Moscow(SU)**

(74) Vertreter: **Nix, Frank Arnold, Dr.**
**Kröckelbergstrasse 15**
**D-6200 Wiesbaden(DE)**

(54) **Transmission eines Allradantriebsfahrzeuges.**

(57) Die Transmission enthält einen Getriebekasten (1), in dessen Gehäuse eine Eingangswelle (4) und eine hohle Hauptwelle (15) mit getriebenen Zahnrädern (27, 28, 24, 18, 19, 20) gelagert sind, wobei mindestens eines dieser Zahnräder auf der Ausgangswelle (11) eines Differentials (12) sitzt und an dieser starr befestigt ist.

FIG.1

EP 0 407 645 A1

# TRANSMISSION EINES ALLRADANTRIEBSFAHRZEUGES

## Gebiet der Technik

Die Erfindung bezieht sich auf das Gebiet des Transportmaschinenbaus und betrifft insbesondere Tansmissionen von Allradantriebsfahrzeugen.

## Zugrundeliegender Stand der Technik

Bekannt sind Transmissionen von Allradantriebsfahrzeugen mit ausrückbarem Antrieb einzelner Achsen, mit Dauerallradantrieb und mit steuerbarer Leistungsverteilung. Am weitesten sind die Transmissionen mit Dauerallradantrieb und zentralem Zwischenachsdifferential verbreitet. Eine solche Bauart (EP, A, 151928) enthält einen Getriebekasten, auf dessen Eingangswelle treibende Zahnräder gelagert sind, die mit auf der Hauptwelle sitzenden getriebenen Zahnrädern in Eingriff kommen. Die Hauptwelle ist hohl ausgeführt und mit dem zentralen Zwischenachsdifferential verbunden. Innerhalb der hohlen Hauptwelle ist die Ausgangswelle des Zwischenachsdifferentials geführt, welche gleichzeitig als treibendes Zahnrad des Hauptgetriebes dient.

Bei einer solchen Transmission besitzt die lange hohle Hauptwelle mit allen auf ihr sitzenden getriebenen Zahnrädern eine verwickelte Bauart und eine geringe Steifigkeit, und die in ihr untergebrachte Ausgangswelle des Differentials weist über die gesamte Länge kleine Durchmesser und eine geringe Steifigkeit auf. Als Ausgangsausbildung anzusehen ist eine Transmission eines Allradantriebskraftwagens (Audi, DE "Das neue Audi Quattro = Programm"), welche einen Getriebekasten enthält, in dessen Gehäuse eine Eingangs- und eine hohle Hauptwelle in Lagern gelagert sind. Innerhalb der hohlen Hauptwelle verläuft die Ausgangswelle eines Zwischenachsdifferentials, mit dessen Körper die hohle Hauptwelle verbunden ist. Alle getriebenen Zahnräder des Getriebekastens sitzen auf der hohlen Hauptwelle. Am Zwischenachsdifferential ist eine Hülse zu seinem Ausgleich vorhanden.

Nachteile dieses Getriebekastens bestehen darin, dass die lange hohle Hauptwelle mit allen darauf angeordneten getriebenen Zahnrädern eine verwickelte Bauart und eine geringe Steifigkeit hat, dass die innerhalb der Hohlwelle verlaufende Ausgangswelle des Differentials auf der gesamten Länge kleine Durchmesser und folglich eine geringe Steifigkeit aufweist und dass das Gehäuse des Getriebekastens zur Vermeidung einer Wärmeausdehnung aus Gusseisen hergestellt ist, wodurch die Masse des Getriebekastens grösser wird.

## Offenbarung der Erfindung

Der Erfindung liege die Aufgabe zugrunde, eine derartige Transmission eines Allradantriebsfahrzeuges zu schaffen, bei der die Ausführung des Getriebekastens eine erhöhte Steifigkeit der Hauptwelle des Getriebekastens und der Ausgangswelle des Zwischenachsdifferentials gewährleistet.

Diese Aufgabe wird dadurch gelöst, dass bei einer Transmission eines Allradantriebsfahrzeuges, die einen Getriebekasten enthält, in dessen Gehäuse eine mit einer Kupplung verbundene Eingangswelle mit treibenden Zahnrädern, die mit getriebenen Zahnrädern in Eingriff kommen, und eine hohle Hauptwelle mit den getriebenen Zahnrädern drehbar gelagert sind, wobei die Hauptwelle mit einem Zwischenachsdifferential verbunden ist, welches einen Körper und mit Hauptgetrieben verbundene Ausgangswellen umfasst, deren eine in der hohlen Hauptwelle koaxiall drehbar gelagert ist, erfindungsgemäss mindestens eines der getriebenen Zahnräder auf der durch die hohle Hauptwelle geführten Ausgangswelle des Differentials angebracht ist.

Eine solche Anordnung mindestens eines der getriebenen Zahnräder gestattet es, bei vereinfachter Ausführung eine erhöhte Steifigkeit der hohlen Haupwelle dadurch zu erzielen, dass sie kürzer baut, wobei die Steifigkeit der Ausgangswelle des Differentials dadurch erhöht wird, dass die Durchmesser des aus der hohlen Hauptwelle ragenden Teils der Ausgangswelle des Differentials grösser werden.

Mindestens ein auf der Ausgangswelle des Differentials angebrachtes getriebenes Zahnrad kann zweckmässigerweise daran starr befestigt werden.

Durch eine solche Anordnung wird die Bauart vereinfacht.

Mindestens ein getriebenes Zahnrad kann zweckmässigerweise auf der Ausgangswelle des Differentials unter Möglichkeit der Relativdrehung und des Eingriffs mit der hohlen Hauptwelle gelagert werden.

Eine solche Anordnung ermöglicht es, die hohle Hauptwelle zu verkürzen und somit ihre Steifigkeit weiter zu erhöhen.

In einer Ausführungsform der Erfindung besitzen die hohle Hauptwelle und die in dieser untergebrachte Ausgangswelle des Differentials Mittel zum gegenseitigen axialen Feststellen, wobei die Hohlwelle im Getriebegehäuse achsverschiebbar gelagert ist.

Eine solche Bauart gestattet es, das Getriebegehäuse aus leichten Legierungen mit hohem Wärmeausdehnungskoeffizienten herzustellen.

## Kurze Beschreibung der Zeichnungen

Die genannten und weitere erfindungsgemässe Besonderheiten und Vorteile der Transmission sollen an Hand der nachfolgenden Beschreibung unter Bezugnahme auf beiliegende Zeichnungen näher erläutert werden. In den Zeichnungen zeigt:
Fig. 1 den erfindungsgemässen Getriebekasten der Transmission, im Längsschnitt;
Fig. 2 dasselbe wie in Fig. 1 mit dem Mittel zum gegenseitigen axialen Feststellen.

## Bevorzugte Ausführungsform der Erfindung

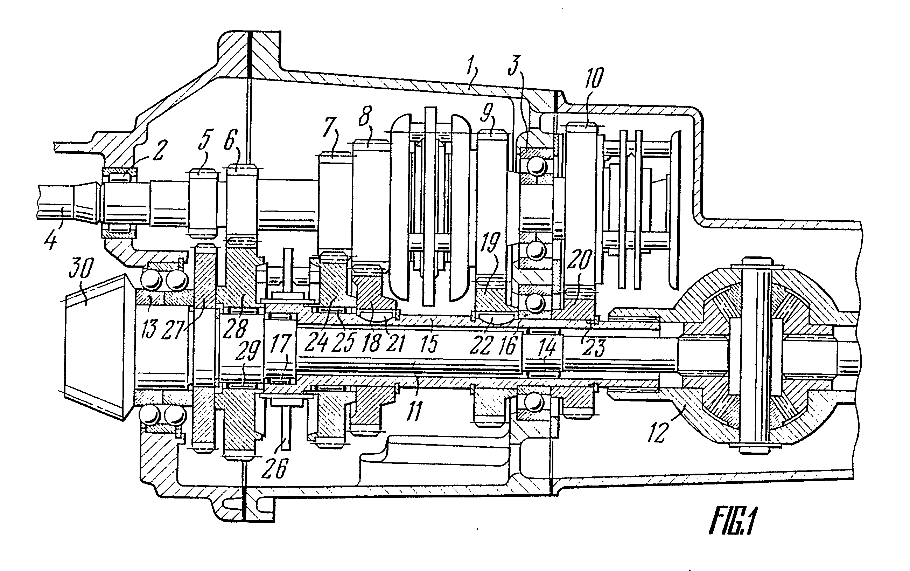

Die Transmission eines Allradantriebsfahrzeuges umfasst ein Gehäuse 1 eines Getriebekastens (Fig. 1), in dessen Lagerungen 2 und 3 eine Eingangswelle 4 mit treibenden Zahnrädern 5, 6, 7, 8, 9, 10 gelagert ist. Die Ausgangswelle 11 eines Zwischenachsdifferentials 12 ist im Getriebegehäuse 1 in einem Lager 13 und in einem Lager 14 innerhalb einer hohlen Hauptwelle 15 gelagert. Die hohle Hauptwelle 15 ist im Getriebegehäuse 1 in einem Lager 16 gelagert und stützt sich über ein Lager 17 auf die Ausgangswelle 11. Getriebene Zahnräder 18, 19, 20 sitzen auf der hohlen Hauptwelle 15 und sind mit dieser durch Keile 21, 22 bzw. 23 starr verbunden. Ein getriebenes Zahnrad 24 ist auf der hohlen Hauptwelle 15 an einem Lager 25 drehbar und mittels eines Synchronisators 26 mit der hohlen Hauptwelle 15 verbindbar gelagert. Ein getriebenes Zahnrad 27 ist auf der Ausgangswelle 11 starr montiert. Ein getriebenes Zahnrad 28 ist auf der Ausgangswelle 11 mittels eines Lagers 29 drehbar und mit der hohlen Hauptwelle 15 mittels des Synchronisators 26 verbindbar gelagert. Am Ende der Welle ist ein treibendes Zahnrad 30 vorhanden.

Eine solche Bauart hat den Vorteil, dass die axiale Abmessung der hohlen Welle 15 verringert und ihr Aufbau vereinfacht wird, wodurch ihre Steifigkeit steigt.

Die Wirkungsweise des Getriebekastens einer Allradantriebstransmission (Fig. 1) ist die folgende: Das Drehmoment wird von der Eingangswelle 4 her je nach dem eingeschalteten Getriebegang über die treibenden Zahnräder 5, 6, 7, 8, 9, 10 auf die entsprechenden getriebehen Zahnräder 18, 19, 20, 24, 27, 28 übertragen. Von dem getriebenen Zahnrad 28 ebenso wie von dem getriebenen Zahnrad 24 wird das Drehmoment über den Synchronisator 26 auf die hohle Hauptwelle 15 und dann über das Zwischenachsdifferential 12 auf die Ausgangs welle 11 übertragen. Das Zwischenachsdifferential 12 lässt sich verriegeln. Vom getriebenen Zahnrad 27 wird das Drehmoment unmittelbar auf die Ausgangswelle 11 übertragen, wobei das Drehmoment über das Zwischenachsdifferential 12 nur im Falle der Verriegelung des Zwischenachsdifferentials 12 übertragen werden kann.

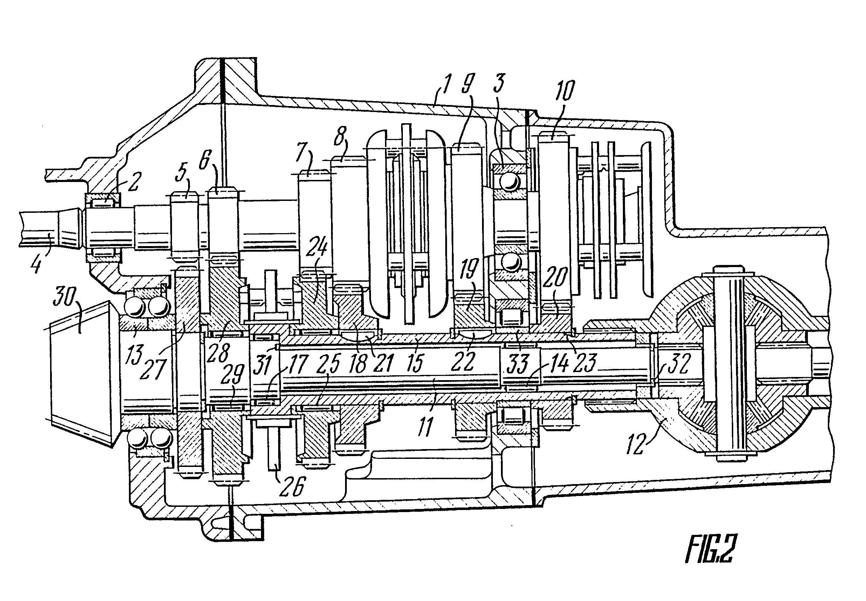

In Fig. 2 ist eine ähnliche Bauart der Transmission dargestellt. Der Unterschied besteht darin, dass die hohle Hauptwelle 15 gegen die axiale Verschiebung auf der Ausgangswelle 11 durch ein Stirnende 31 und einen Sperring 32 gesichert und im Getriebegehäuse 1 in einer schwimmenden Lagerung 33 gelagert ist.

Eine solche Bauart schliesst den Einfluss der Wärmeausdehnung des Getriebegehäuses 1 auf die gegenseitige axiale Verschiebung der Wellen 11 und 15 aus und ermöglicht die Herstellung des Getriebegehäuses 1 aus leichten Legierungen mit einem hohen Wärmeausdehnungskoeffizienten und somit die Verringerung der Masse des Getriebekastens.

Die Funktion des Getriebekastens der Transmission gemäss der in Fig. 2 gezeigten Ausführungsform der Erfindung unterscheidet sich von der Funktion der in Fig. 1 dargestellten Erfindungsform dadurch, dass die beim Zahneingriff der Zahnräder 24, 18, 19, 20 entstehende axiale Kraftkomponente über das Stirnende 31 auf die Ausgangswelle 11 des Zwischenachsdifferentials 12 übertragen wird und die Lagerung 13 von der Axialkraft seitens des Hauptgetriebes entlastet. Die an dem Stirnende 31 entstehende Reibung erlaubt dabei dem Zwischenachsdifferential 12, als Differential erhöhter Reibung zu wirken.

## Gewerbliche Anwendbarkeit

Die vorliegende Erfindung kann in Personen-, Lastkraftwagen, Leichtschleppern und anderen Fahrzeugen zum Einsatz kommen.

## Ansprüche

1. Transmission eines Allradantriebsfahrzeuges, die einen Getriebekasten (1) enthält, in dessen Gehäuse eine mit einer Kupplung verbundene Eingangswelle (4) mit treibenden Zahnrädern (5, 6, 7, 8, 9, 10), die mit getriebenen Zahnrädern (27, 28, 24, 18, 19, 20) in Eingriff kommen , und eine hohle Hauptwelle (15) mit den getriebenen Zahnrädern drehbar gelagert sind, wobei die Hauptwelle (15) mit einem Zwischenachsdifferential (12) verbunden ist, welches einen Körper und mit Hauptgetrieben verbundene Ausgangswellen einschliesst, deren eine (11) in der hohlen Hauptwelle (15) koaxial drehbar gelagert ist, dadurch **gekennzeichnet,** dass mindestens eines der getriebenen Zahnräder (27, 28, 24, 18,19, 20) auf der durch die hohle Hauptwelle (15) geführten Ausgangswelle (11) des Differentials (12) angebracht ist.

2. Transmission nach Anspruch 1, dadurch **gekennzeichnet,** dass mindestens ein getriebenes Zahnrad, das auf der Ausgangswelle (11) des Differentials (12) sitzt, an dieser starr befestigt ist.

3. Transmission nach Anspruch 1, dadurch **gekennzeichnet,** dass mindestens ein getriebenes Zahnrad auf der Ausgangswelle des Differentials unter Möglichkeit der Relativdrehung und der Kupplung mit der hohlen Hauptwelle gelagert ist.

4. Transmission nach einem der vorhergehenden Ansprüche , dadurch **gekennzeichnet,** dass die hohle Hauptwelle (15) und die in dieser untergebrachte Ausgangswelle (11) des Differentials (12) Mittel zum gegenseitigen axialen Feststellen besitzen, wobei die hohle Welle im Getriebegehäuse achsverschiebbar gelagert ist.

FIG.1

FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-2073029 (DAIMLER BENZ) <br> * das ganze Dokument * <br> --- | 1, 3 | B60K17/346 |
| D,A | EP-A-0151928 (TOCHIGIFUGI) <br> * Zusammenfassung; Ansprüche 1-3; Figuren * <br> --- | 1-4 | |
| A | GB-A-2022731 (KUBOTA) <br> * Seite 2, Zeilen 18 - 22; Figur 2 * <br> ----- | 2, 3 | |

RECHERCHIERTE
SACHGEBIETE (Int. Cl.5 )

B60K
F16H

Der vorliegende Recherchenbericht wurde für alle Patentansprüche erstellt

| Recherchenort | Abschlußdatum der Recherche | Prüfer |
|---|---|---|
| DEN HAAG | 07 MAERZ 1990 | TOPP-BORN S. |

EPO FORM 1503 03.82 (P0403)